# EUROPEAN PATENT SPECIFICATION

(11) **EP 4 584 708 B1**
(45) Date of publication and mention of the grant of the patent: **02.12.2026**
(21) Application number: 23805255.9
(22) Date of filing: 13.10.2023
(51) Int. Cl.: G06F 21/62, H04L 9/40

(54) **MANAGING INFORMATION USING OPAQUE TOKENS**
VERWALTUNG VON INFORMATIONEN UNTER VERWENDUNG OPAKER TOKEN
GESTION D'INFORMATIONS À L'AIDE DE JETONS OPAQUES

(30) Priority: 07.11.2022 US 202263382603 P
(43) Date of publication of application: 16.07.2025
(73) Proprietor: Google LLC, Mountain View, CA 94043 (US)
(72) Inventor: WHITE, Daniel Robert, London Greater London N1C 4AG (GB); RADU, Vlad Adrian, 10117 Berlin (DE); CHALOUPKA, David, London Greater London N1C 4AG (GB); ANTAEV, Evgeny, London Greater London N1C 4AG (GB); PATULESCU, Darie Radu Mihail, Minato City, Tokyo 106-6126 (JP); AYRES, John William, London Greater London N1C 4AG (GB); KUZNETSOV, Oleh, London Greater London N1C 4AG (GB)
(74) Representative: Derry, Paul Stefan
(86) International application number: PCT/US2023/035127
(87) International publication number: WO 2024/102227

(56) References cited:
- US-A1- 2016 065 555
- US-A1- 2019 132 320
- US-B1- 10 785 021
- HARDT D ET AL: "The OAuth 2.0 Authorization Framework; rfc6749.txt", THE OAUTH 2.0 AUTHORIZATION FRAMEWORK; RFC6749.TXT, INTERNET ENGINEERING TASK FORCE, IETF; STANDARD, INTERNET SOCIETY (ISOC) 4, RUE DES FALAISES CH- 1205 GENEVA, SWITZERLAND, 13 October 2012 (2012-10-13), pages 1 - 76, XP015084115

## Description

### BACKGROUND

Generally, software developers utilize authentication tokens, such as OAuth, to access user information. However, such authorization tokens may provide application developers the ability to access user identifying information managed by an application platform provider. Current privacy procedures may restrict software developers' access to user identifying information but may also restrict the software developers' ability to effectively manage data to remote application services and manage multiple profiles within an application.

US10785021B1 discloses methods for authenticating a user account. In various examples, the methods may comprise performing a first handshake comprising sending authentication data to a first computing device. The authentication data may include a handshake identifier, a user token, and an encryption key. In some examples, the methods may further comprise storing the handshake identifier, the user token, and the encryption key in a database.

Hardt et al: "The OAuth 2.0 Authorization Framework", Internet Engineering Task Force, 13 October 2012 (2012-10-13), XP015084115, discloses enabling a third-party application to obtain limited access to an HTTP service.

US2016/065555A1 discloses systems for managing user-level security in a cloud-based service platform. A server in a cloud-based environment is configured to interface with storage devices that store objects that are accessible over a network by two or more users. An enterprise entity is identified using an enterprise identifier associated with the enterprise, and an application service is associated with an application identifier.

US2019/132320A1 a method, system and computer program product relating to an application server operable to manage a microservice-based application, i.e. app, on behalf of clients, the clients being available for use by system actors who may be, for example, end users, bots, developers or other apps.

### SUMMARY

The claims define the subject matter for protection. Any examples and embodiments of the description not falling within the scope of the claims do not form part of the invention as defined by the independent claims. In general, techniques of the present disclosure enable software developers to manage data stored at remote application services without obtaining personally identifying information related to users of the applications. For example, rather than software developers simply using an authentication token, such as an OAuth token, a remote computing system generates a user token associated with a particular user account but that does not include any personally identifying information and does not provide a mechanism by which the software developer may be able to access personally identifying information associated with the particular user account. Using this user token, application developers may manage information associated with an application and the user without having access to personally identifiable information.

In some aspects, the techniques described herein relate to a method that includes receiving, by a remote computing system and from an application service executing at a computing device, a token generation request, an authentication token associated with an application executing at the computing device, and a context identifier, and determining, by the remote computing system and based on the authentication token, a user account. The method may also include generating, by the remote computing system, a user token, storing, by the remote computing system, a mapping of the user token to the user account in a mapping data structure, and sending, by the remote computing system and to the computing device, the user token.

In some aspects, the techniques described herein relate to a computing system that includes a memory, a network interface, one or more processors operably coupled to the memory, and a network interface. The one or more processors may execute instructions stored at the memory to cause the one or more processors to receive, from a remote computing device and via the network interface, a token generation request, an authentication token associated with an application, and a context identifier, determine, using the authentication token, a user account, generate a user token, store, in the memory, a mapping of the user token to the user account in a mapping data structure, and send, via the network interface, the user token to the remote computing device.

In some aspects, the techniques described herein relate to a non-transitory computer-readable storage medium configured to store instructions that, when executed, cause one or more processors of a computing system to receive a token generation request, an authentication token associated with an application, and a context identifier and to determine, using the authentication token, a user account. The one or more processors may also be configured to generate a user token, store a mapping of the user token to the user account in a mapping data structure, and send the user token.

The details of one or more examples are set forth in the accompanying drawings and the description below. Other features, objects, and advantages of the disclosure will be apparent from the description and drawings, and from the claims.

### BRIEF DESCRIPTION OF DRAWINGS

FIG. 1 is a block diagram illustrating an example computing system for generating, storing and verifying a user token, in accordance with one or more aspects of the present disclosure.
FIG. 2 is a block diagram illustrating an example computing device configured to request and store a user token, in accordance with one or more aspects of the present disclosure.
FIG. 3 is a block diagram illustrating an example remote computing system configured to manage user tokens, in accordance with one or more aspects of the present disclosure.
FIG. 4 is a flowchart illustrating an example operation of a computing system for user token management, in accordance with one or more aspects of the present disclosure.
FIG. 5 is a flowchart illustrating an example operation of implementing user tokens, in accordance with one or more aspects of the present disclosure.
FIG. 6 is a flowchart illustrating an example operation for managing user tokens, in accordance with one or more aspects of the present disclosure.

### DETAILED DESCRIPTION

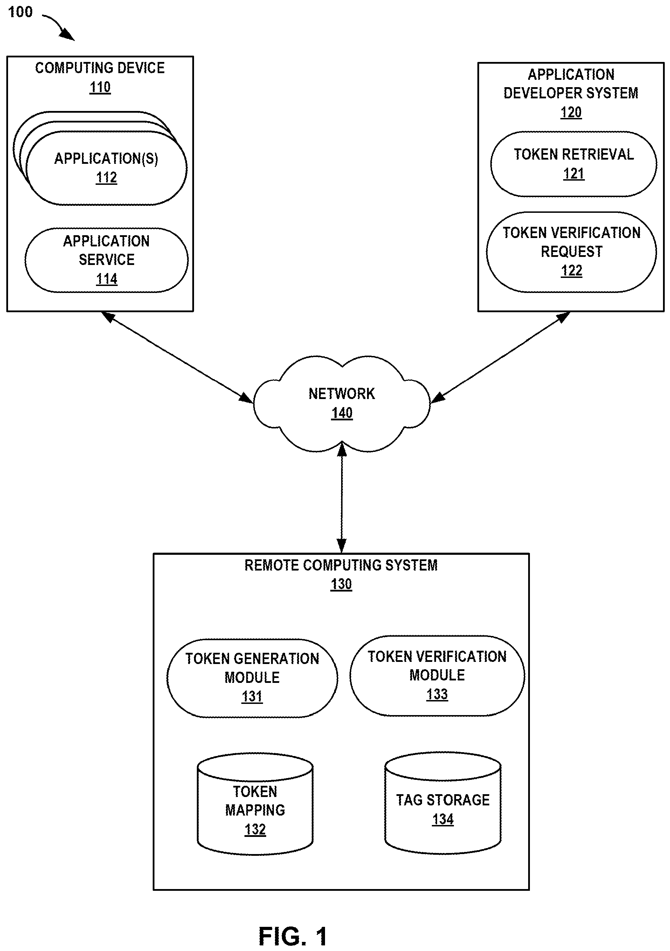

FIG. 1 is a block diagram illustrating example computing system 100 for generating, storing and verifying a user token, in accordance with one or more aspects of the present disclosure. Computing system 100 of FIG. 1 includes computing device 110, application developer system 120, and remote computing system 130 communicatively coupled via network 140.

Computing device 110 represents a mobile or non-mobile computing device. Examples of computing device 110 include user computing devices (e.g., laptops, desktops, and mobile computing devices such as tablets, smartphones, wearable computing devices, etc.); embedded computing devices (e.g., devices embedded within a vehicle, camera, image sensor, industrial machine, satellite, gaming console or controller, or home appliance such as a refrigerator, thermostat, energy meter, home energy manager, smart home assistant, etc.); server computing devices (e.g., database servers, parameter servers, file servers, mail servers, print servers, web servers, game servers, application servers, etc.); dedicated, specialized model processing or training devices; virtual computing devices; other computing devices or computing infrastructure; or combinations thereof configured to send and receive information via a network, such as network 140.

Computing device 110 includes application 112 and application service 114. Computing device 110 may execute application 112 and application service 114 with one or more processors. A user of computing device 110 may provide user input to execute application 112. The user input may include a touch input, a voice input, a keyboard input, a mouse, trackpad, or other pointing device input, etc. The user input may be a selection of an application icon, a link, or other graphical or textual object that is associated with particular functionality of application 112 (e.g., a default or "home" screen of the application, navigation instruction functionality, mapping functionality, restaurant listing functionality, nearby store functionality, telephony functionality, social network functionality, gaming functionality, or any other functionality provided by the application).

Application service 114 may include, but is not limited to, a bound service. Application service 114 may execute at computing device 110 to bind inputs of a user operating computing device 110 to application 112. Application service 114 may be executed when application 112 requests and/or sends information to remote computing system 130. In general, application service 114 is an intermediary between application 112 and other devices interacting with application 112 through a network, such as network 140.

Application 112 may send to application service 114 a request to generate a user token and a context identifier. Application service 114 may select an authentication token associated with application 112. Remote computing system 130 may receive the request to generate a user token, the context identifier, and the authentication token from application service 114 through network 140.

Network 140 represents any public or private communications network, for instance, cellular, Wi-Fi, and/or other types of networks for transmitting data between computing systems, servers, and computing devices. For example, computing device 110 may exchange data, via network 140, with remote computing system 130 to provide tokens and/or context identifiers. Network 140 may include one or more network hubs, network switches, network routers, or any other network equipment that are operatively inter-coupled thereby providing for the exchange of information between computing device 110 and remote computing system 130. Computing device 110 and remote computing system 130 may transmit and receive data across network 140 using any suitable communication techniques. Computing device 110 and remote computing system 130 may each be operatively coupled to network 140 using respective network links. The links coupling computing device 110 and remote computing system 130 to network 140 may be Ethernet or other types of network connections and such connections may be wireless and/or wired connections.

Remote computing system 130 represents any suitable remote computing systems, such as one or more desktop computers, laptop computers, mainframes, servers, cloud computing systems, etc. capable of sending information to and receiving information from computing device 110 via a network, such as network 140. Remote computing system 130 hosts (or at least provides access to) information associated with one or more applications executable by computing device 110, such as user account information. In some examples, remote computing system 130 represents a cloud computing system that provides the application services via the cloud.

Application developer system 120 is associated with a developer of application 112. Application developer system 120 represents any suitable remote computing systems, such as one or more desktop computers, laptop computers, mainframes, servers, cloud computing systems, etc. capable of sending information to and receiving information from remote computing system 130 via a network, such as network 140. Application developer system 120 hosts (or at least provides access to) information associated with one or more applications executable by computing device 110. In some examples, application developer system 120 represents a cloud computing system that provides the applications via the cloud.

Application developer system 120 represents a mobile or non-mobile computing device. Examples of application developer system 120 include user computing devices (e.g., laptops, desktops, and mobile computing devices such as tablets, smartphones, wearable computing devices, etc.); embedded computing devices (e.g., devices embedded within a vehicle, camera, image sensor, industrial machine, satellite, gaming console or controller, or home appliance such as a refrigerator, thermostat, energy meter, home energy manager, smart home assistant, etc.); server computing devices (e.g., database servers, parameter servers, file servers, mail servers, print servers, web servers, game servers, application servers, etc.); dedicated, specialized model processing or training devices; virtual computing devices; other computing devices or computing infrastructure; or combinations thereof configured to send and receive information via a network, such as network 140.

In accordance with techniques of the present disclosure, computing device 110 may request and/or receive a user token. Application 112 may be executed by a user of computing device 110. Application 112 may send a token generation request and a context identifier to application service 114. Application service 114 may select an authentication token associated with application 112. Application service 114 may send the token generation request, the context identifier, and the authentication token to remote computing system 130. Remote computing system 130 may determine a user account based on the authentication token. Remote computing system 130 may generate a user token with token generation module 131. Remote computing system 130 may store a mapping of the user token to the user account in token mapping 132. Remote computing system 130 may send the user token to computing device 110 through a network, such as network 140.

In some examples, remote computing system 130 may automatically generate a user token. Remote computing system 130 may generate the user token to include a timestamp (e.g., current server timestamp). Remote computing system 130 may include the timestamp in each generated user token to establish a time to live (TTL) parameter. Remote computing system 130 may receive a request to generate a user token in response to application developer system 120 determining that the TTL parameter of a previously generated user token has expired. For example, remote computing system 130 may generate a new user token responsive to a specified amount of time that has elapsed from the timestamp included in the previous user token. Remote computing system 130 and/or application developer system 120 may maintain a user token table that may include one or more indices for applying TTL rules efficiently.

Application 112 may define a context identifier. For example, application 112 may generate a context identifier based on one or more package identifiers of application 112, an application-specific user identifier of a user account associated with application 112, and/or a user profile identifier of a user profile associated with application 112. Application developer system 120 may use the context identifier to store information to a user account without developers operating application developer system 120 having access to or knowledge of what user account the information is being stored. In some examples, application 112 may generate the context identifier by at least hashing (e.g., by using a one-way hash function, SHA-1, SHA-512, etc.) one or more package identifiers of application 112, an application-specific user identifier of a user account associated with application 112, and a user profile identifier of a user profile associated with application 112.

In some examples, remote computing system 130 may determine whether there is an existing user token associated with the context identifier. Remote computing system 130 may identify an existing user token that may be an authentication token actively providing remote computing system 130 access to the user account. In response to determining that an existing user token is associated with the context identifier, remote computing system 130 may determine the user account to be the user account associated with the existing user token.

Remote computing system 130 may determine a user account based on the authentication token. A user account may generally be associated with a user of application 112 executing on computing device 110. There may be one or more user accounts associated with application 112 executing on computing device 110. A user account may include data representing a user's input or progress when interacting with application 112. A user account may include the identification of application 112 and/or computing device 110. Remote computing system 130, for example, may manage an identification scheme (e.g., OAuth 2.0) to relate a user account to an authentication token.

In some examples, remote computing system 130 may receive data representative of a state of application from computing device 110. The state of application 112 may include a user's previous interactions with application 112. For example, the state of application 112 may include stored data of a user's input in application 112, such as a user's progress in a fitness application, gaming application, or other entertainment-related application. In some examples, remote computing system 130 may associate the data representative of the state of application 112 with the user token. For example, remote computing system 130 may include an indication of the state of application 112 in a field or as a parameter of the user token. Remote computing system 130 may include an application profile management system that may store the user token and the data representative of the state of application 112.

In some examples, remote computing system 130 may generate the user token by encrypting a tuple including a package identifier, a user account identifier, the context identifier, and a timestamp. The user token does not include any information that would enable either remote computing system 130 or application developer system 120 to determine the personal identity of the current user of computing device 110. The user token may be assigned a time to live (TTL) on the order of milliseconds to days. The user token may be a string that is immutable. The user token may have a unique index to one or more users of computing device 110, to application 112, and/or to a token value - which may prevent duplicate user tokens.

Token mapping 132 may store a mapping of the user token to the user account. Token mapping 132 may store the mapping of the user token to the user account in a mapping data structure. The mapping data structure may include, for example, a mapping of the user token to the user account as one-to-one, many-to-one, or many-to-many mappings. For example, there may be one user token associated with one user account. In other examples, there may be many user tokens associated with one user account. In other examples, there may be many user tokens associated with many user accounts. Token mapping 132 allows the user token to "stick" to a user account and allows easier access to data associated with application 112 without providing information associated with a user of application 112.

In the many-to-one example, remote computing system 130 may determine whether there is an existing user token associated with a context identifier when determining the user account associated with application 112. In response to determining an existing user token associated with a context identifier, remote computing system 130 determines a user account associated with the existing user token. In other words, remote computing system 130 may determine a user account based on one or more existing user tokens associated with a context identifier provided by application service 114.

In the many-to-many example, one or more context identifiers may be associated with one or more existing user tokens. In some examples, this may result in more than one user account. There may be a plurality of user tokens generated that, unlike an authentication token, may allow remote computing system 130 and/or application developer system 120 to access and write data to one or more user accounts associated with application 112. In other examples, application service 114 may limit the number of user accounts by limiting the number of user tokens that may be generated for a user account.

In some examples, remote computing system 130 may execute an application profile management system. The application profile management system may manage and/or store profiles for application 112 created by computing device 110. Remote computing system 130 may include an application profile management system to manage profiles for application 112 that may include application data, subscriptions, purchases, etc. associated with one or more user accounts.

In the example of FIG. 1, application developer system 120 includes token retrieval 121 and token verification request 122. Application developer system 120 may execute token retrieval 121 and token verification request 122 with one or more processors.

Remote computing system 130 receives a request to verify a user token from application developer system 120. Token verification request 122, of application developer system 120, may send the request to verify the user token with a remote procedure call (RPC). Token verification module 133 of remote computing system 130 may determine whether the user token is a valid user token based on one or more entries in the mapping data structure stored in token mapping 132. Token verification module 133 may determine whether the user token is valid with a stateful or stateless verification mechanism. Token verification module 133 may implement a stateful verification mechanism by physically storing records of verified user tokens in one or more storage devices of remote computing system 150. Token verification module 133 may implement a stateless verification mechanism based on whether remote computing system 130 generates user tokens with self-encoded encryption. For example, remote computing system 130 may generate user tokens that include any type of encryption key and a timestamp. Token verification module 133, of remote computing system 130, may include a cipher and key rotation schedule to decrypt keys included in the user token and verify the user token without having to physically store records of generated user tokens.

In response to token verification module 133 determining that the user token is a valid user token, remote computing system 130 stores a tag associated with application 112 and an application context represented by the valid user token in tag storage 134. In some examples, remote computing system 130 may store a tag that may include an indication of the user account associated with application 112, a last refresh time of application 112, an existing user token, and/or a timestamp associated with the user token.

Token retrieval 121 of application developer system 120 may retrieve one or more user tokens associated with application 112. For example, token retrieval 121 may make a remote procedure call to request user tokens from remote computing system 130. Remote computing system 130 may send the user token via network 140, for example. In response to retrieving the one or more user tokens associated with application 112, application developer system 120 may also interact with user tokens associated with application 112 by creating a list of new user tokens associated with application 112, deleting user tokens associated with application 112, and/or unlinking user tokens associated with application 112 and a user account. Application developer system 120 may interact with any user tokens associated with application 112 by making a remote procedure call, for example. In some examples, token retrieval 121 may only obtain user tokens associated with application 112 in response to remote computing system 130 providing application developer system 120 verified credentials for application 112 executing on computing device 110. Verified credentials, may include but is not limited to, a successful login attempt for application 112 sent from computing device 110 to remote computing system 130.

In some examples, remote computing system 130 may send the user token to application developer system 120 that conceals the identity of a user of application 112. Application developer system 120 may receive the user token with token retrieval 121. Application developer system 120 may store the user token in memory. Application developer system 120 may store the user token for an ephemeral amount of time and/or for high-speed retrieval, such as cache. In some examples, application developer system 120 may store the user token in a table with an encryption key associated with an encryption mechanism established by remote computing system 130 (e.g., symmetric ciphers). Application developer system 120 may use the key stored with the user token to read or write tags for user accounts. In this way, remote computing system 130 may verify a user token based on a key application developer system 120 may include in a request, rather than remote computing system 130 having to maintain physical records of valid user tokens.

Application developer system 120 may determine whether a time to live (TTL) parameter of the user token has expired. In some examples, application developer system 120, or more specifically token verification request 122, may automatically send a request to generate a user token in response to application developer system 120 determining that the TTL parameter has expired. In examples when application developer system 120 determines a TTL parameter of the user token has not expired, application developer system 120 may send remote computing system 130 a request to verify the user token.

In some examples, application developer system 120 may receive a user account and the user token. In other examples, application developer system 120 may obtain information related to the user token, such as an identifier of application 112, a timestamp of the latest user token generated, and/or an identifier of the devices corresponding to user tokens that are associated with application 112 and the user account. In response to obtaining information related to the user token, application developer system 120 may, for example, write data to a tag stored on remote computing system 130.

In situations in which the techniques herein discuss collecting personal information about users, or may make use of personal information, the users may be provided with an opportunity to control whether programs or features collect user information (e.g., information about a user's social network, social actions or activities, profession, a user's preferences, or a user's current location), or to control whether and/or how to receive content from the content server that may be more relevant to the user. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over how information is collected about the user and used by a content server.

The techniques herein may provide the advantage of increased user security. In general, remote computing system 130 may store a tag associated with a user account and application 112. In some examples, remote computing system 130 may communicate, through network 140 for example, using Hypertext Transfer Protocol Secure (HTTPS), which will prevent unauthorized third parties from modifying a tag, user token, or context identifier. In addition, the user token associated with a tag may be encrypted and any attempted change in ciphertext of the user token may result in an invalid user token.

The techniques herein may also provide the advantage of increased user privacy. The user token is opaque, which ensures that an unauthorized third party cannot understand the identification of a user associated with application 112. In some examples, the user token may embed a timestamp when generated to ensure that two user tokens generated at different times will be different. The embedded timestamp may prevent identifying the same user across devices and across returning installs on the same device. In addition, context identifiers may include an encoding of fingerprinting signals to allow remote computing system 130 to compare fingerprints when verifying the user token. The fingerprinting signals may prevent an unauthorized third party from altering a context identifier.

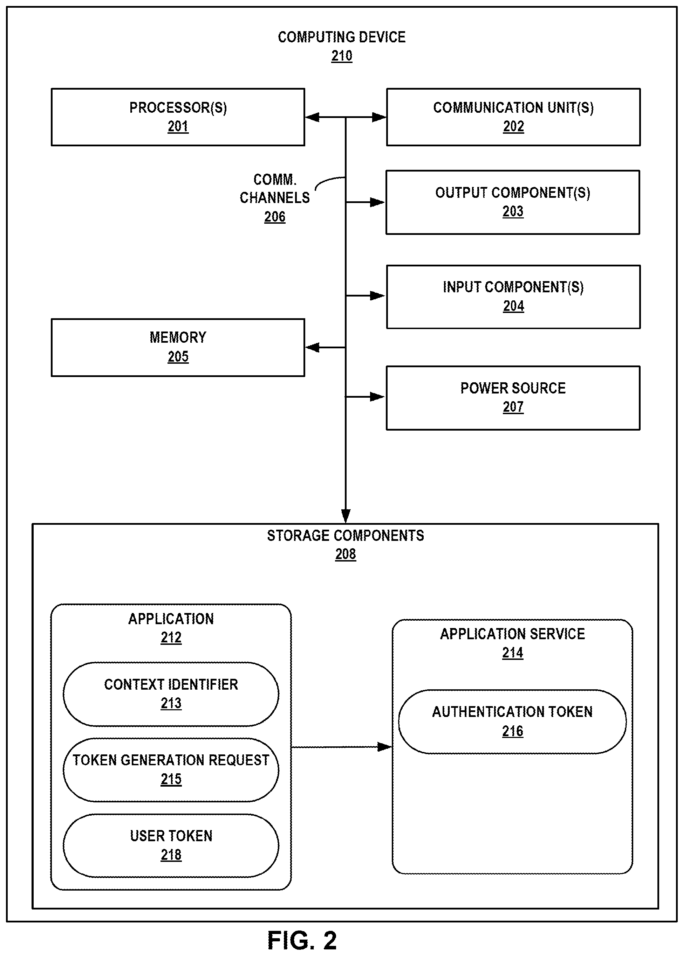

FIG. 2 is a block diagram illustrating example computing device 210 configured to request and store a user token, in accordance with one or more aspects of the present disclosure. Computing device 210, application 212, and application service 214 may correspond to examples of computing device 110, application 112, and application service 114 of FIG. 1, respectively. As shown in the example of FIG. 2, computing device 210 includes one or more processors 201, one or more communication units 202, one or more output components 203, one or more input components 204, memory 205, power source 207, and storage components 208. Storage components 208 include application 212 and application service 214. Communication channels 206 may interconnect each of the components 201, 202, 203, 204, 205, 207, and/or 208 for inter-component communications (physically, communicatively, and/or operatively. In some examples, communication channels 206 may include a system bus, a network connection, one or more inter-process communication data structures, or any other components for communicating data between hardware and/or software.

One or more processors 201 may implement functionality and/or execute instructions with computing device 210. For example, processors 201 on computing device 210 may receive and execute instructions stored by storage components 208 that provide the functionality of application 212 and application service 214. These instructions executed by processors 201 may cause computing device 210 to store and/or modify information, within storage components 208 during program execution. Processors 201 may execute instructions of application 212 and application service 214.

Power source 207 may provide power to one or more components of computing device 210. In some examples, power source 207 may be a battery. Power source 207 may provide power to one or more components of computing device 210. Examples of power source 207 may include, but are not necessarily limited to, batteries having zinc-carbon, lead-acid, nickel cadmium (NiCd), nickel metal hydride (NiMH), lithium ion (Li-ion), and/or lithium polymer (Lipo) chemistries. In some examples, power source 207 may have a limited capacity (e.g., 1000-3000 mAh).

One or more storage components 208 within computing device 210 may store information for processing during operation of computing device 210. In some examples, storage components 208 are a temporary memory, meaning that a primary purpose of storage components 208 is not long-term storage. Storage components 208 of computing device 210 may be configured for short-term storage of information as volatile memory and therefore not retain stored contents if deactivated. Examples of volatile memories include random access memories (RAM), dynamic random access memories (DRAM), static random access memories (SRAM), and other forms of volatile memories known in the art.

Storage components 208, in some examples, also include one or more computer-readable storage media. Storage components 208 may be configured to store larger amounts of information than volatile memory. Storage components 208 may further be configured for long-term storage of information as non-volatile memory space and retain information after activate/off cycles. Examples of non-volatile memories include magnetic hard discs, optical discs, floppy discs, flash memories, or forms of electrically programmable memories (EPROM) or electrically erasable and programmable (EEPROM) memories. Storage components 208 may store program instructions and/or data associated with application 212.

Computing device 210 may communicate with the remote computing system with one or more communication units 202. One or more communication units 202 of computing device 210 may communicate with external devices by transmitting and/or receiving data. For example, computing device 210 may use communication units 202 to transmit and/or receive radio signals and radio networks such as a cellular radio network. In some examples, communication units 202 may transmit and/or receive satellite signals on a satellite network such as a Global Positioning System (GPS) network. Examples of communication units 202 include a network interface card (e.g., such as an Ethernet card), an optical transceiver, a radio frequency transceiver, a GPS receiver, or any other type of device that can send and/or receive information. Other examples of communication units 202 include Bluetooth^{®}, GPS, 3G, 4G, and Wi-Fi^{®} radios found in mobile devices as well as Universal Serial Bus (USB) controllers and the like.

One or more input components 204 may receive user token 218 generated by a remote computing system. One or more input components 204 of computing device 210 may also receive input from a user. Examples of input or tactile, audio, kinetic, and optical input, to name only a few examples. Input components 204 of computing device 210, in one example, include a mouse, keyboard, voice responsive system, video camera, buttons, control pad, microphone or any other type of device for detecting input from a human or machine.

Input received by one or more input components 204 may execute application 212. The execution of application 212 may send token generation request 215 to application service 214, along with context identifier 213. In some examples, application service 214 may select authentication token 216 associated with application 212. Authentication token 216 may be an access token, such as OAuth. Authentication token 216 may require a user of computing device 210 to input credentials associated with user account components 208.

In some examples, one or more output components 203 may send context identifier 213, authentication token 216, and token generation request 215 to a remote computing system to generate user token 218. One or more output components 203 of computing device 210 may generate output. Examples of output are tactile, audio, and video output. Output components 203 of computing device 210, in some examples, include a presence-sensitive screen, sound card, video graphics adapter card, speaker, cathode ray tube (CRT) monitor, liquid crystal display (LCD), or any other type of device for generating output to a human or machine. Output components may include display components such as cathode ray tube (CRT) monitor, liquid crystal display (LCD), Light-Emitting Diode (LED) or any other type of device for generating tactile, audio, and/or visual output.

In some instances, memory 205 may store data representative of a state of application 212. The state of application 212 may represent a user's interaction with application 212. A user may interact with application 212 with one or more input components 204. Data representing the state of application 212 may be sent to the remote computing system with one or more output components 203. The remote computing system may associate the data representative of the state of application 212 with the generated user token and store the user token and the data representative of the state of application 212 in memory 205.

Computing device 210 may execute application 212 with the data representative of the state of application 212 by requesting, from the remote computing system, user token 218. User token 218 may be associated with data representative of the state of application 212.

Computing device 210 may request to access a profile from the remote computing system. The profile may include data associated with a user account (e.g., application data for various applications, purchases, etc.). The remote computing system may verify whether the requested profile exists or is otherwise active. For example, the remote computing system may verify whether the requested profile was stored or otherwise managed by an application profile management system. In response to verifying the requested profile by the remote computing system, the remote computing system may link a user token and/or data representative of a state of the application with the profile. Computing device 210 may receive the profile from the remote computing system. In this way, computing device 210 may resume application 212 after launching application 212 based on the linking of the user token and data representative of a state of application 212 with the requested profile.

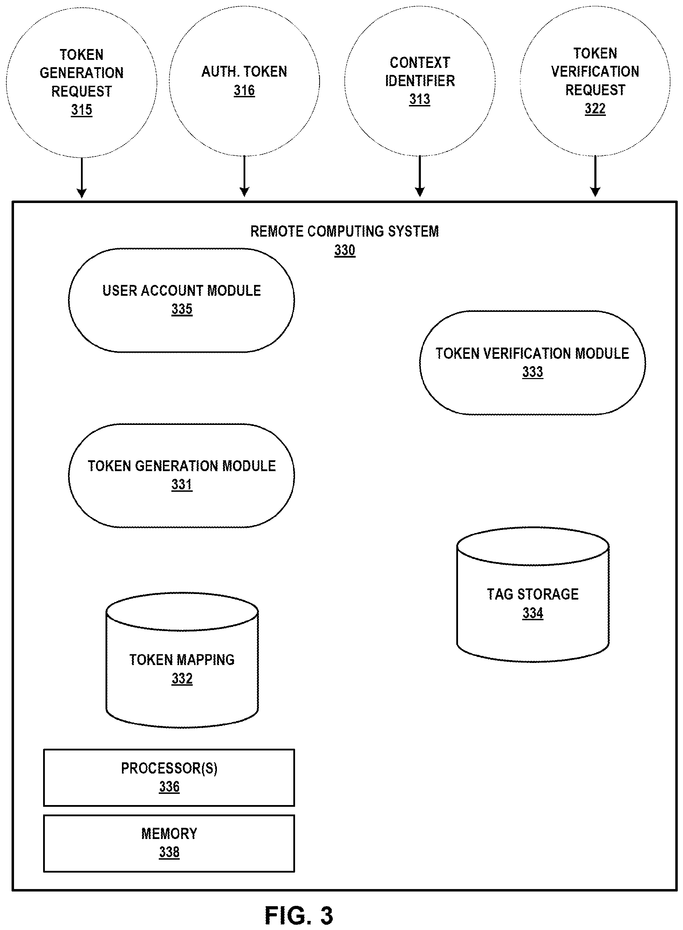

FIG. 3 is a block diagram illustrating example remote computing system 330 configured to manage user tokens, in accordance with one or more aspects of the present disclosure. Remote computing system 330, token generation module 331, token mapping 332, token verification module 333, and tag storage 334 may correspond to examples of remote computing system 130, token generation module 131, token mapping 132, token verification module 133, and tag storage 134 of FIG. 1, respectively. In one example, remote computing system 330 receives token generation request 315, authentication token 316, and context identifier 313 from an application service executing at a computing device. User account module 335 determines a user account based on authentication token 316. Token generation module 331 generates a user token. Token mapping 332 stores a mapping of the user token to the user account.

In some examples, remote computing system 330 may receive token verification request 322 from an application developer system. Remote computing system 330 determines whether a user token is a valid user token with token verification module 333 based on the mapping stored in token mapping 332. In response to token verification module 333 determining whether the user token is a valid user token, remote computing system 330 stores a tag associated with an application and an application context represented by the valid user token in tag storage 334.

Remote computing system 330 includes user account module 335, token generation module 331, token mapping 332, token verification module 333, and tag storage 334. Modules 335, 331 and 333 may perform operations described above using software, hardware, firmware, or a mixture of hardware, software, and firmware residing in and/or executing at remote computing system 330. Remote computing system 330 may execute modules 335, 331 and 333 with one or more processors 336 or with multiple devices. Remote computing system 330 may store instructions for processors 336 in memory 338. Remote computing system 330 may execute modules 335, 331 and 333 as virtual machines executing on underlying hardware. Modules 335, 331 and 333 may execute as one or more executable programs at an application layer of a computing platform.

User account module 335 may determine a user account based on authentication token 316. In some instances, user account module 335 may identify an existing authentication token that is currently active with respect to context identifier 313. In response to user account module 335 determining the existing authentication token, user account module 335 may ignore authentication token 316 and select a user account associated with the existing authentication token as the user account.

Token generation module 331 may generate a user token. For example, token generation module 331 may generate a user token including at least encrypting a tuple of a package identifier, a user account identifier, the context identifier, and a timestamp. The user token generated by token generation module 331 does not include any personally identifiable information of a user account.

Token mapping 332 includes a mapping data structure to map the user token to the user account. Token mapping may store the mapping data structure in memory 338. In some instances, remote computing system 330, or more specifically token generation module 331, may determine that a user token has expired (e.g., based on a TTL parameter). Token generation module 331 may generate a new user token for a user account associated with the expired user token. Token mapping 332 may update the mapping of the expired user token to the user account by replacing the expired user token with the new user token and overwriting the previous mapping data structure with a new mapping data structure in memory 338.

Token verification module 333 may receive verification request 38 to verify whether a user token is valid. In response to receiving verification request 38, token verification module 333 may determine whether the user token is valid. Token verification module 333 may determine the validity of the user token by referencing the mapping data structure stored in token mapping 332.

In response to token verification module 333 validating the user token, tag storage 334 may store a tag associated with the application and an application context associated with the user token. Tag storage may use memory 338 to store the tag and the application context. The tag may include an indication of the user account, a last refresh time of the application, the user token, and a timestamp associated with the user token. The tag does not store personally identifiable information of a user associated with the user account.

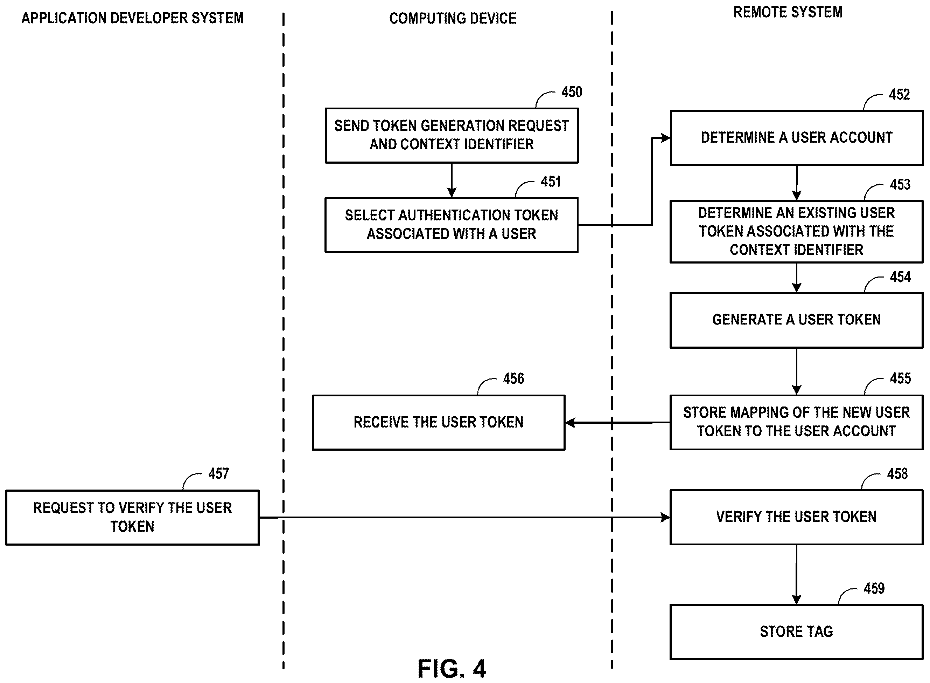

FIG. 4 is a flowchart illustrating an example operation of a computing system for user token management, in accordance with one or more aspects of the present disclosure. For purposes of illustration only, the example operations are described below within the context of computing system 100 of FIG. 1. Although shown as including elements 450-459, in some examples, one or more of elements 450-459 may be performed in any order different from the order shown in the example of FIG. 4.

In the example of FIG. 4, a user of computing device 110 may provide an input at computing device 110 to execute application 112. Application 112, executing at computing device 110, sends, to application service 114 executing at computing device 110, a token generation request and a context identifier (450).

In some examples, when application 112 sends a token generation request and a context identifier to application service 114, application service 114 may select an authentication token associated with a user of computing device 110 executing application 112 (451). Remote computing system 130 receives the token generation request, the context identifier, and the authentication token from application service 114. Remote computing system 130 determines a user account based on the authentication token (452). In some examples, remote computing system 130 may determine whether there is an existing user token associated with the context identifier. In response to determining that an existing user token is associated with the context identifier, remote computing system 130 may determine a user account associated with the existing user token as the user account (453).

Remote computing system 130 generates a user token (454). Remote computing system 130 may generate the user token by, for example, encrypting a tuple including a package identifier, a user account identifier, the context identifier, and a timestamp.

Remote computing system 130 stores a mapping of the user token to the user account (455). In some examples, the mapping may be one-to-one. In other examples, the mapping may be one-to-many or many-to-one. Computing device 110 receives the user token from remote computing system 130 (456).

In some examples, application developer system 120 may send remote computing system 130 a request to verify the user token (457). Application developer system 120 may receive the user token from computing device 110 with token retrieval 121 and send the request to verify the user token with token verification request 122. Remote computing system 130 verifies the user token by determining whether the user token is a valid user token based on the stored mapping (458). In response to determining the user token is a valid user token, remote computing system 130 stores a tag associated with application 112 and an application context represented by the valid user token (459). The tag may include the user account, a last refresh time of the application, the existing user token, and a timestamp associated with the user token.

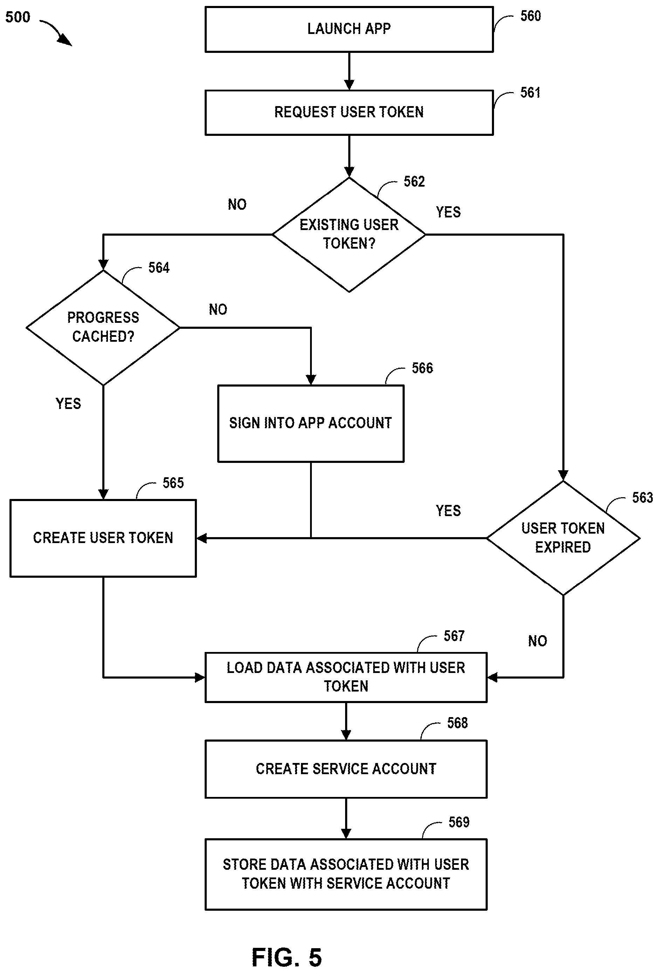

FIG. 5 is a flowchart illustrating an example operation of implementing user tokens, in accordance with one or more aspects of the present disclosure. For purposes of illustration only, the example operations are described below within the context of computing system 100 of FIG. 1. Although shown as including elements 560-569, in some examples, one or more of elements 560-569 may be performed in any order different from the order shown in the example of FIG. 5.

In the example of FIG. 5, a user of computing device 110 may provide an input at computing device 110 to launch application 112 (560). Computing device 110 may request a user token from remote computing system 130 (561). Remote computing system 130 may determine whether there is an existing user token (562). In some examples, remote computing system 130 may determine that there is no existing user token. In response to remote computing system 130 determining there is no existing user token, remote computing system 130 may determine whether there is progress cached (564). Progress cached may be related to data representative of a state of the application, as described above. In some examples, remote computing system 130 may determine that there is no progress cached. In response to remote computing system 130 determining there is no progress cached, remote computing system 130 may instruct computing device 110 to sign into an application account (566). After computing device 110 signs into an application account, remote computing system 130 may create a user token (565). In other examples, remote computing system 130 may determine there is progress cached. In response to remote computing system 130 determining there is progress cached, remote computing system 130 may create a user token (565). Remote computing system 130 may create the user token (565) using the techniques described with respect to FIG. 4, above.

In other examples, remote computing system 130 may determine that there is an existing user token. In response to remote computing system 130 determining there is an existing user account, remote computing system 130 may determine whether the user token has expired (563). In some examples, remote computing system 130 may determine that the user token has expired and remote computing system 130 may create a user token (565).

In response to remote computing system 130 creating a user token or remote computing system 130 determining that a user token has not expired, remote computing system 130 may load data associated with the user token (567). Remote computing system 130 may create a service account (568). In response to remote computing system 130 creating a service account, remote computing system 130 may store data associated with the user token with the service account (569).

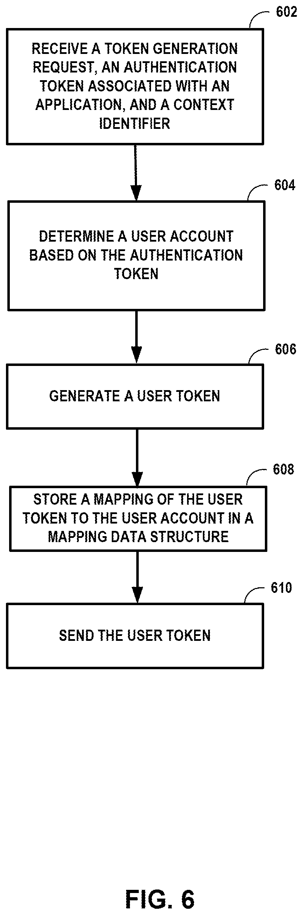

FIG. 6 is a flowchart illustrating an example operation for managing user tokens, in accordance with one or more aspects of the present disclosure. Although the example operation of FIG. 6 is described as being performed by remote computing system 130 of FIG. 1 and with respect to elements illustrated in FIG. 3, in other examples some or all of the example operations may be performed by another computing device or computing system.

Remote computing system 130 may receive a token generation request, an authentication token associated with an application, and a context identifier (602). Remote computing system 130 may receive the token generation request, the authentication token associated with an application, and the context identifier from an application service executing at a computing device (e.g., application service 114 of computing device 110). Remote computing system 130 may receive token generation request 315, authentication token 316, and the context identifier 313 of FIG. 3, for example. Remote computing system 130 may determine a user account based on the authentication token (604). In some examples, remote computing system 130 may determine whether an existing user token is associated with the user account determined based on the authentication token. Responsive to remote computing system 130 determining there is an existing user token associated with the user account, remote computing system 130 may send the existing user token to the computing device (e.g., computing device 110). Responsive to remote computing system 130 determining there is no existing user token associated with the user account or determining the existing user token associated with the user account has expired, remote computing system 130 may generate a user token (606). For example, token generation module 131 of FIG. 1 may generate a user token, such as user token 218 of FIG. 2.

Remote computing system 130 may store a mapping of the user token to the user account in a mapping data structure (608). For example, remote computing system 130 may store a mapping of the generated user token to the determined user account with token mapping 132. Remote computing system 130 may send the user token to a computing device (e.g., computing device 110) (610).

Throughout the disclosure, examples are described where a computing device and/or a computing system analyzes information (e.g., wireless ID tags and respective information, locations, context, motion, etc.) associated with a computing device and a user of the computing device, only if the computing device receives permission from the user of the computing device to analyze the information. For example, in situations discussed above and below, before a computing device or computing system can collect or may make use of information associated with a user, the user may be provided with an opportunity to provide input to control whether programs or features of the computing device and/or computing system can collect and make use of user information (e.g., information about a user's or user device's current location, such as by GPS or wireless ID tag, etc.), or to dictate whether and/or how to the device and/or system may receive content that may be relevant to the user. In addition, certain data may be treated in one or more ways before it is stored or used by the computing device and/or computing system, so that personally identifiable information is removed. For example, a user's identity and image may be treated so that no personally identifiable information can be determined about the user, or a user's geographic location may be generalized where location information is obtained (such as to a city, ZIP code, or state level), so that a particular location of a user cannot be determined. Thus, the user may have control over how information is collected about the user and used by the computing device and computing system.

In this way, the above described techniques may enable the following examples:
Example 1: A method includes receiving, by a remote computing system and from an application service executing at a computing device, a token generation request, an authentication token associated with an application executing at the computing device, and a context identifier; determining, by the remote computing system and based on the authentication token, a user account; generating, by the remote computing system, a user token; storing, by the remote computing system, a mapping of the user token to the user account in a mapping data structure; and sending, by the remote computing system and to the computing device, the user token.
Example 2: The method of example 1, further includes receiving, by the remote computing system and from the computing device, data representative of a state of the application; associating, by the remote computing system, the user token with the data representative of the state of the application; and storing, by an application profile management system executing at the remote computing system, the user token and the data representative of the state of the application.
Example 3: The method of example 2, further includes receiving, by the remote computing system and from the computing device, a request to access a profile, wherein the profile is associated with the user account and is stored in the application profile management system; verifying, by the remote computing system, the profile exists; and responsive to verifying the profile exists, linking the user token and the data representative of the state of the application with the profile; sending, by the remote computing system and to the computing device, the profile.
Example 4: The method of any of examples 1-3, further includes receiving, by the remote computing system and from an application developer system, a request to verify the user token, wherein the application developer system is associated with a developer of the application; responsive to receiving the request to verify the user token, determining, by the remote computing system and based on one or more entries in the mapping data structure, whether the user token is valid; and responsive to determining that the user token is valid, storing, by the remote computing system, a tag associated with the application and an application context associated with the user token, wherein the tag includes an indication of the user account, the user token and a timestamp associated with the user token.
Example 5: The method of example 4, further includes receiving, by the remote computing system and from the application developer system, a request for the user token; sending, by the remote computing system and to the application developer system, the user token; determining, by the application developer system, whether a time to live parameter of the user token has expired; responsive to determining that the user token has not expired, sending, from the application developer system and to the remote computing system, a request to verify the user token.
Example 6: The method of any of examples 4 and 5, further includes sending, by the remote computing system and to the application developer system, the user token; storing, by the application developer system, the user token and a key associated with an encryption mechanism established by the remote computing system.
Example 7: The method of any of examples 1-6, wherein the user token is a first user token, and wherein the method further comprises: determining, by the remote computing system, the first user token has expired; responsive to determining the first user token has expired, generating, by the remote computing system, a second user token; storing, by the remote computing system, an updated mapping of the second user token to the user account in a new mapping data structure; and sending, by the remote computing system and to the computing device, the second user token.
Example 8: The method of any of examples 1-7, further includes determining, by the remote computing system, whether there is an existing user token associated with the context identifier; and responsive to determining that an existing user token is associated with the context identifier, determining, by the remote computing system, a user account associated with the existing user token as the user account.
Example 9: The method of any of examples 1-8, wherein generating, by the remote computing system, a user token comprises at least encrypting a tuple including a package identifier, a user account identifier, the context identifier, and a timestamp.
Example 10: The method of any of examples 1-9, wherein the context identifier is generated by at least hashing one or more package identifiers of the application executing at the computing device, an application-specific user identifier of a user account associated with the application executing at the computing device, and a user profile identifier of a user profile associated with the application.
Example 11: A computing system includes memory; a network interface; and one or more processors operably coupled to the memory and the network interface, wherein the one or more processors execute instructions stored at the memory to: receive, from an application service executing at a computing device and via the network interface, a token generation request, an authentication token associated with an application, and a context identifier; determine, using the authentication token, a user account; generate a user token; store, in the memory, a mapping of the user token to the user account in a mapping data structure; and send, via the network interface, the user token.
Example 12: The computing system of example 11, wherein the instructions executable by the one or more processors further comprises instructions to: receive, via the network interface, data representative of a state of the application; associate the user token with the data representative of the state of the application; and store, by an application profile management system, the user token and the data representative of the state of the application.
Example 13: The computing system of example 12, wherein the instructions executable by the one or more processors further comprises instructions to: receive, from the computing device, a request to access a profile, wherein the profile is associated with the user account and is stored in the application profile management system; verify whether the profile exists; and responsive to verifying the profile exists, link the user token and the data representative of the state of the application with the profile; send, to the computing device, the profile.
Example 14: The computing system of any of examples 11 through 13, wherein the instructions executable by the one or more processors further comprises instructions to: receive, from an application developer system, a request to verify the user token, wherein the application developer system is associated with a developer of the application; responsive to receiving the request to verify the user token, determine, based on one or more entries in the mapping data structure, whether the user token is valid; and responsive to determining that the user token is valid, store a tag associated with the application and an application context associated with the user token, wherein the tag includes an indication of the user account, the user token and a timestamp associated with the user token.
Example 15: The computing system of example 14, wherein the instructions executable by the one or more processors further comprises instructions to: receive, from the application developer system, a request for the user token; send, to the application developer system, the user token; receive, from the application developer system, a request to verify the user token responsive to the application developer system determining that the user token has not expired based on a time to live parameter associated with the user token.
Example 16: The computing system of any of examples 14 and 15, wherein the instructions executable by the one or more processors further comprises instructions to: send, to the application developer system, the user token with instructions to store the user token and a key associated with an encryption mechanism.
Example 17: The computing system of any of examples 11 through 16, wherein the user token is a first user token, and wherein the instructions executable by the one or more processors further comprises instructions to: responsive to determining the first user token has expired, generate a second user token; store an updated mapping of the second user token to the user account in a new mapping data structure; and send, to the computing device, the second user token.
Example 18: The computing system of any of examples 11 through 17, wherein the instructions executable by the one or more processors further comprises instructions to: determine whether there is an existing user token associated with the context identifier; responsive to determining that the existing user token is associated with the context identifier, determine a user account associated with the existing user token as the user account.
Example 19: The computing system of any of examples 11 through 18, wherein the user token comprises at least encrypting a tuple including a package identifier, a user account identifier, the context identifier, and a timestamp.
Example 20: The computing system of any of examples 11 through 19, wherein the context identifier is generated by at least hashing one or more package identifiers of the application executing at the computing device, an application-specific user identifier of a user account associated with the application executing at the computing device, and a user profile identifier of a user profile associated with the application.
Example 21: Computer-readable storage medium configured to store instructions that, when executed, cause one or more processors of a computing system to: receive a token generation request, an authentication token associated with an application, and a context identifier; determine, using the authentication token, a user account; generate a user token; store a mapping of the user token to the user account in a mapping data structure; and send the user token.
Example 22: The computer-readable storage medium of example 21, wherein the instructions further cause the one or more processors to: receive data representative of a state of the application; associate the user token with the data representative of the state of the application; and store the user token and the data representative of the state of the application.
Example 23: The computer-readable storage medium of example 22, wherein the instructions further cause the one or more processors to: receive a request to access a profile, wherein the profile is associated with the user account and is stored in an application profile management system; verify whether the profile exists; and responsive to verifying the profile exists, link the user token and the data representative of the state of the application with the profile; send the profile.
Example 24: The computer-readable storage medium of any of examples 21 through 23, wherein the instructions further cause the one or more processors to: receive, from an application developer system, a request to verify the user token, wherein the application developer system is associated with a developer of the application; responsive to receiving the request to verify the user token, determine, based on one or more entries in the mapping data structure, whether the user token is valid; and responsive to determining that the user token is valid, store a tag associated with the application and an application context associated with the user token, wherein the tag includes an indication of the user account, the user token and a timestamp associated with the user token.
Example 25: The computer-readable storage medium of example 24, wherein the instructions further cause the one or more processors to: receive, from an application developer system, a request to verify the user token, wherein the application developer system is associated with a developer of the application; responsive to receiving the request to verify the user token, determine, based on one or more entries in the mapping data structure, whether the user token is valid; and responsive to determining that the user token is valid, store a tag associated with the application and an application context associated with the user token, wherein the tag includes an indication of the user account, the user token and a timestamp associated with the user token.
Example 26: The computer-readable storage medium of any of examples 24 and 25, wherein the instructions further cause the one or more processors to: send, to the application developer system, the user token with instructions to store the user token and a key associated with an encryption mechanism.
Example 27: The computer-readable storage medium of any of examples 21 through 26, wherein the user token is a first user token, and wherein the instructions further cause the one or more processors to: responsive to determining the first user token has expired, generate a second user token; store an updated mapping of the second user token to the user account in a new mapping data structure; and send, to the computing device, the second user token.
Example 28: The computer-readable storage medium of any of examples 21 through 27, wherein the instructions further cause the one or more processors to: determine whether there is an existing user token associated with the context identifier; responsive to determining that the existing user token is associated with the context identifier, determine a user account associated with the existing user token as the user account.
Example 29: The computer-readable storage medium of any of examples 21 through 28, wherein the user token comprises at least encrypting a tuple including a package identifier, a user account identifier, the context identifier, and a timestamp.
Example 30: The computer-readable storage medium of any of examples 21 through 29, wherein the context identifier is generated by at least hashing one or more package identifiers of the application executing at the computing device, an application-specific user identifier of a user account associated with the application executing at the computing device, and a user profile identifier of a user profile associated with the application.

Various embodiments have been described. These and other embodiments are within the scope of the following claims.

## Claims

1. A method comprising:
receiving, by a remote computing system (130) and from an application service (114) executing at a computing device (110), a token generation request (215), an authentication token (216) associated with an application (212) executing at the computing device, and a context identifier (213);
determining, by the remote computing system and based on the authentication token, a user account;
generating, by the remote computing system, a user token (218);
storing, by the remote computing system, a mapping of the user token to the user account in a mapping data structure;
sending, by the remote computing system and to the computing device, the user token;
receiving, by the remote computing system and from an application developer system (120), a request to verify the user token, wherein the application developer system is associated with a developer of the application;
determining, by the remote computing system and based on one or more entries in the mapping data structure, whether the user token is valid; and
storing, by the remote computing system in response to determining that the user token is a valid user token, a tag associated with the application and an application context associated with the user token, wherein the tag includes an indication of the user account, the user token and a timestamp associated with the user token.

2. The method of claim 1, further comprising:
receiving, by the remote computing system (130) and from the application developer system (120), a request for the user token (218);
sending, by the remote computing system and to the application developer system, the user token;
determining, by the application developer system, whether a time to live parameter of the user token has expired; and
responsive to determining that the user token has not expired, sending, from the application developer system and to the remote computing system, a request to verify the user token.

3. The method of claim 1, further comprising:
sending, by the remote computing system (130) and to the application developer system (120), the user token (218); and
storing, by the application developer system, the user token and a key associated with an encryption mechanism established by the remote computing system.

4. The method of any of claims 1-3, wherein generating, by the remote computing system (130), a user token comprises at least encrypting a tuple including a package identifier, a user account identifier, the context identifier (213), and a timestamp.

5. A computing system comprising:
memory (205);
a network interface; and
one or more processors (201) operably coupled to the memory and the network interface, wherein the one or more processors execute instructions stored at the memory to:
receive, from an application service executing at a remote computing device and via the network interface, a token generation request (215), an authentication token (216) associated with an application (212), and a context identifier (213);
determine, using the authentication token, a user account;
generate a user token (218);
store, in the memory, a mapping of the user token to the user account in a mapping data structure;
send, via the network interface, the user token to the remote computing device;
receive, via the network interface from an application developer system, a request to verify the user token, wherein the application developer system is associated with a developer of the application;
determine, using the mapping data structure, whether the user token is valid; and store, in memory in response to determining that the user token is a valid user token, a tag associated with the application and an application context associated with the user token, wherein the tag includes an indication of the user account, the user token and a timestamp associated with the user token.

6. The computing system of claim 5, wherein the one or more processors (201) are further configured to:
receive, via the network interface, data representative of a state of the application (212);
associate the user token (218) with the data representative of the state of the application; and
store, in memory, the user token and the data representative of the state of the application.

7. The computing system of claim 6, wherein the instructions executable by the one or more processors (212) further comprises instructions to:
receive, from the computing device, a request to access a profile, wherein the profile is associated with the user account and is stored in the application profile management system;
verify whether the profile exists; and
responsive to verifying the profile exists, link the user token and the data representative of the state of the application with the profile;
send, to the computing device, the profile.

8. The computing system of any of claims 5-7, wherein the context identifier (213) is generated by at least hashing one or more package identifiers of the application executing at the computing device, an application-specific user identifier of a user account associated with the application executing at the computing device, and a user profile identifier of a user profile associated with the application.

9. A non-transitory computer-readable storage medium configured to store instructions that, when executed, cause one or more processors (201) of a computing system to:
receive, from an application service executing at a remote computing device, a token generation request (215), an authentication token (216) associated with an application (212), and a context identifier (213);
determine, using the authentication token, a user account;
generate a user token (218);
store a mapping of the user token to the user account in a mapping data structure;
send the user token to the remote computing device
receive, from an application developer system, a request to verify the user token, wherein the application developer system is associated with a developer of the application;
determine, using the mapping data structure, whether the user token is valid; and
store, in response to determining that the user token is a valid user token, a tag associated with the application and an application context associated with the user token, wherein the tag includes an indication of the user account, the user token and a timestamp associated with the user token.

10. The non-transitory computer-readable storage medium of claim 9, wherein the instructions further cause the one or more processors (212) to:
send, to the application developer system, the user token (218) with instructions to store the user token and a key associated with an encryption mechanism.

11. The non-transitory computer-readable storage medium of any of claims 9-10, wherein the user token (218) is a first user token, and wherein the instructions further cause the one or more processors to:
determine the first user token has expired;
generate a second user token;
store an updated mapping of the second user token to the user account in a new mapping data structure; and
send the second user token.

12. The non-transitory computer-readable storage medium of any of claims 9-11, wherein the instructions further cause the one or more processors to:
determine whether there is an existing user token associated with the context identifier; and
determine a user account associated with the existing user token as the user account.

## Patentansprüche

1. Verfahren, umfassend:
Empfangen, durch ein entferntes Rechensystem (130) und von einem Anwendungsdienst (114), der auf einer Rechenvorrichtung (110) ausgeführt wird, einer Tokenerzeugungsanforderung (215), eines Authentifizierungstokens (216), das einer Anwendung (212) zugeordnet ist, die auf der Rechenvorrichtung ausgeführt wird, und eines Kontextbezeichners (213);
Bestimmen, durch das entfernte Rechensystem und basierend auf dem Authentifizierungstoken, eines Benutzerkontos;
Erzeugen, durch das entfernte Rechensystem, eines Benutzertokens (218);
Speichern, durch das entfernte Rechensystem, einer Zuordnung des Benutzertokens zu dem Benutzerkonto in einer Zuordnungsdatenstruktur;
Senden, durch das entfernte Rechensystem und an die Rechenvorrichtung, des Benutzertokens;
Empfangen, durch das entfernte Rechensystem und von einem Anwendungsentwicklersystem (120), einer Anforderung zum Verifizieren des Benutzertokens, wobei das Anwendungsentwicklersystem einem Entwickler der Anwendung zugeordnet ist;
Bestimmen, durch das entfernte Rechensystem und basierend auf einem oder mehreren Einträgen in der Zuordnungsdatenstruktur, ob das Benutzertoken gültig ist; und
Speichern, durch das entfernte Rechensystem als Reaktion auf das Bestimmen, dass das Benutzertoken ein gültiges Benutzertoken ist, eines Tags, das der Anwendung zugeordnet ist, und eines Anwendungskontexts, der dem Benutzertoken zugeordnet ist, wobei das Tag eine Angabe des Benutzerkontos, des Benutzertokens und eines Zeitstempels, der dem Benutzertoken zugeordnet ist, beinhaltet.

2. Verfahren nach Anspruch 1, ferner umfassend:
Empfangen, durch das entfernte Rechensystem (130) und von dem Anwendungsentwicklersystem (120), einer Anforderung für das Benutzertoken (218);
Senden, durch das entfernte Rechensystem und an das Anwendungsentwicklersystem, des Benutzertokens;
Bestimmen, durch das Anwendungsentwicklersystem, ob ein Timeto-Live-Parameter des Benutzertokens abgelaufen ist; und
als Reaktion auf das Bestimmen, dass das Benutzertoken nicht abgelaufen ist, Senden, von dem Anwendungsentwicklersystem und an das entfernte Rechensystem, einer Anforderung zum Verifizieren des Benutzertokens.

3. Verfahren nach Anspruch 1, ferner umfassend:
Senden, durch das entfernte Rechensystem (130) und an das Anwendungsentwicklersystem (120), des Benutzertokens (218); und
Speichern, durch das Anwendungsentwicklersystem, des Benutzertokens und eines Schlüssels, der einem durch das entfernte Rechensystem eingerichteten Verschlüsselungsmechanismus zugeordnet ist.

4. Verfahren nach einem der Ansprüche 1-3, wobei Erzeugen, durch das entfernte Rechensystem (130), eines Benutzertokens mindestens Verschlüsseln eines Tupels umfasst, das einen Paketbezeichner, einen Benutzerkontobezeichner, den Kontextbezeichner (213) und einen Zeitstempel beinhaltet.

5. Rechensystem, umfassend:
einen Speicher (205);
eine Netzwerkschnittstelle; und
einen oder mehrere Prozessoren (201), die mit dem Speicher und der Netzwerkschnittstelle wirkverbunden sind, wobei der eine oder die mehreren Prozessoren in dem Speicher gespeicherte Anweisungen ausführen, um:
von einem Anwendungsdienst, der auf einer entfernten Rechenvorrichtung ausgeführt wird, und über die Netzwerkschnittstelle eine Tokenerzeugungsanforderung (215), ein Authentifizierungstoken (216), das einer Anwendung (212) zugeordnet ist, und einen Kontextbezeichner (213) zu empfangen;
unter Verwendung des Authentifizierungstokens ein Benutzerkonto zu bestimmen;
ein Benutzertoken (218) zu erzeugen;
in dem Speicher eine Zuordnung des Benutzertokens zu dem Benutzerkonto in einer Zuordnungsdatenstruktur zu speichern;
über die Netzwerkschnittstelle das Benutzertoken an die entfernte Rechenvorrichtung zu senden;
über die Netzwerkschnittstelle von einem Anwendungsentwicklersystem eine Anforderung zum Verifizieren des Benutzertokens zu empfangen, wobei das Anwendungsentwicklersystem einem Entwickler der Anwendung zugeordnet ist;
unter Verwendung der Zuordnungsdatenstruktur zu bestimmen, ob das Benutzertoken gültig ist;
und
in dem Speicher als Reaktion auf das Bestimmen, dass das Benutzertoken ein gültiges Benutzertoken ist, ein Tag, das der Anwendung zugeordnet ist, und einen Anwendungskontext, der dem Benutzertoken zugeordnet ist, zu speichern, wobei das Tag eine Angabe des Benutzerkontos, des Benutzertokens und eines Zeitstempels, der dem Benutzertoken zugeordnet ist, beinhaltet.

6. Rechensystem nach Anspruch 5, wobei der eine oder die mehreren Prozessoren (201) ferner konfiguriert sind, um:
über die Netzwerkschnittstelle Daten, die einen Zustand der Anwendung (212) repräsentieren, zu empfangen;
das Benutzertoken (218) den Daten, die den Zustand der Anwendung repräsentieren, zuzuordnen; und
in dem Speicher das Benutzertoken und die Daten, die den Zustand der Anwendung repräsentieren, zu speichern.

7. Rechensystem nach Anspruch 6, wobei die durch den einen oder die mehreren Prozessoren (212) ausführbaren Anweisungen ferner Anweisungen umfassen, um:
von der Rechenvorrichtung eine Anforderung zum Zugreifen auf ein Profil zu empfangen, wobei das Profil dem Benutzerkonto zugeordnet ist und in dem Anwendungsprofilverwaltungssystem gespeichert ist;
zu verifizieren, ob das Profil existiert; und
als Reaktion auf das Verifizieren, dass das Profil existiert, das Benutzertoken und die Daten, die den Zustand der Anwendung repräsentieren, mit dem Profil zu verknüpfen;
das Profil an die Rechenvorrichtung zu senden.

8. Rechensystem nach einem der Ansprüche 5-7, wobei der Kontextbezeichner (213) durch mindestens Hashen eines oder mehrerer Paketbezeichner der auf der Rechenvorrichtung ausgeführten Anwendung, eines anwendungsspezifischen Benutzerbezeichners eines Benutzerkontos, das der auf der Rechenvorrichtung ausgeführten Anwendung zugeordnet ist, und eines Benutzerprofilbezeichners eines Benutzerprofils, das der Anwendung zugeordnet ist, erzeugt wird.

9. Nichtflüchtiges computerlesbares Speichermedium, das konfiguriert ist, Anweisungen zu speichern, die bei Ausführung einen oder mehrere Prozessoren (201) eines Rechensystems veranlassen zum:
Empfangen, von einem Anwendungsdienst, der auf einer entfernten Rechenvorrichtung ausgeführt wird, einer Tokenerzeugungsanforderung (215), eines Authentifizierungstokens (216), das einer Anwendung (212) zugeordnet ist, und eines Kontextbezeichners (213);
Bestimmen, unter Verwendung des Authentifizierungstokens, eines Benutzerkontos;
Erzeugen eines Benutzertokens (218);
Speichern einer Zuordnung des Benutzertokens zu dem Benutzerkonto in einer Zuordnungsdatenstruktur;
Senden des Benutzertokens an die entfernte Rechenvorrichtung Empfangen, von einem Anwendungsentwicklersystem, einer Anforderung zum Verifizieren des Benutzertokens, wobei das Anwendungsentwicklersystem einem Entwickler der Anwendung zugeordnet ist;
Bestimmen, unter Verwendung der Zuordnungsdatenstruktur, ob das Benutzertoken gültig ist; und
Speichern, als Reaktion auf das Bestimmen, dass das Benutzertoken ein gültiges Benutzertoken ist, eines Tags, das der Anwendung zugeordnet ist, und eines Anwendungskontexts, der dem Benutzertoken zugeordnet ist, wobei das Tag eine Angabe des Benutzerkontos, des Benutzertokens und eines Zeitstempels, der dem Benutzertoken zugeordnet ist, beinhaltet.

10. Nichtflüchtiges computerlesbares Speichermedium nach Anspruch 9, wobei die Anweisungen ferner den einen oder die mehreren Prozessoren (212) veranlassen zum:
Senden, an das Anwendungsentwicklersystem, des Benutzertokens (218) mit Anweisungen zum Speichern des Benutzertokens und eines Schlüssels, der einem Verschlüsselungsmechanismus zugeordnet ist.

11. Nichtflüchtiges computerlesbares Speichermedium nach einem der Ansprüche 9-10, wobei das Benutzertoken (218) ein erstes Benutzertoken ist und wobei die Anweisungen ferner den einen oder die mehreren Prozessoren veranlassen zum:
Bestimmen, dass das erste Benutzertoken abgelaufen ist;
Erzeugen eines zweiten Benutzertokens;
Speichern einer aktualisierten Zuordnung des zweiten Benutzertokens zu dem Benutzerkonto in einer neuen Zuordnungsdatenstruktur; und
Senden des zweiten Benutzertokens.

12. Nichtflüchtiges computerlesbares Speichermedium nach einem der Ansprüche 9-11, wobei die Anweisungen ferner den einen oder die mehreren Prozessoren veranlassen zum:
Bestimmen, ob ein vorhandenes Benutzertoken vorliegt, das dem Kontextbezeichner zugeordnet ist; und
Bestimmen eines Benutzerkontos, das dem vorhandenen Benutzertoken zugeordnet ist, als das Benutzerkonto.

## Revendications

1. Procédé comprenant :
la réception, par un système informatique distant (130) et en provenance d'un service d'application (114) s'exécutant sur un dispositif informatique (110), d'une demande de génération de jeton (215), d'un jeton d'authentification (216) associé à une application (212) s'exécutant sur le dispositif informatique et d'un identifiant de contexte (213) ;
la détermination, par le système informatique distant et sur la base du jeton d'authentification, d'un compte d'utilisateur ;
la génération, par le système informatique distant, d'un jeton d'utilisateur (218) ;
le stockage, par le système informatique distant, d'une mise en correspondance du jeton d'utilisateur avec le compte d'utilisateur dans une structure de données de mise en correspondance ;
l'envoi, par le système informatique distant et au dispositif informatique, du jeton d'utilisateur ;
la réception, par le système informatique distant et en provenance d'un système de développement d'application (120), d'une demande de vérification du jeton d'utilisateur, dans lequel le système de développement d'application est associé à un développeur de l'application ;
la détermination, par le système informatique distant et sur la base d'une ou des entrées dans la structure de données de mise en correspondance, du fait que le jeton d'utilisateur est valide ou non ; et
le stockage, par le système informatique distant en réponse à la détermination du fait que le jeton d'utilisateur est un jeton d'utilisateur valide, d'une balise associée à l'application et d'un contexte d'application associé au jeton d'utilisateur, dans lequel la balise comporte une indication du compte d'utilisateur, le jeton d'utilisateur et un horodatage associé au jeton d'utilisateur.

2. Procédé selon la revendication 1, comprenant en outre :
la réception, par le système informatique distant (130) et en provenance du système de développement d'application (120), d'une demande visant le jeton d'utilisateur (218) ;
l'envoi, par le système informatique distant et au système de développement d'application, du jeton d'utilisateur ;
la détermination, par le système de développement d'application, du fait qu'un paramètre de durée de vie du jeton d'utilisateur a expiré ou non ; et
en réponse à la détermination du fait que le jeton d'utilisateur n'a pas expiré, l'envoi, depuis le système de développement d'application et au système informatique distant, d'une demande de vérification du jeton d'utilisateur.

3. Procédé selon la revendication 1, comprenant en outre :
l'envoi, par le système informatique distant (130) et au système de développement d'application (120), du jeton d'utilisateur (218) ; et
le stockage, par le système de développement d'application, du jeton d'utilisateur et d'une clé associée à un mécanisme de chiffrement établi par le système informatique distant.

4. Procédé selon l'une quelconque des revendications 1 à 3, dans lequel la génération, par le système informatique distant (130), d'un jeton d'utilisateur comprend au moins le chiffrement d'un uplet comportant un identifiant de paquet, un identifiant de compte d'utilisateur, l'identifiant de contexte (213) et un horodatage.

5. Système informatique comprenant :
une mémoire (205) ;
une interface réseau ; et
un ou des processeurs (201) couplés de manière opérationnelle à la mémoire et à l'interface réseau, dans lequel le ou les processeurs exécutent des instructions stockées dans la mémoire pour :
recevoir, en provenance d'un service d'application s'exécutant sur un dispositif informatique distant et par l'intermédiaire de l'interface réseau, une demande de génération de jeton (215), un jeton d'authentification (216) associé à une application (212) et un identifiant de contexte (213) ;
déterminer, à l'aide du jeton d'authentification, un compte d'utilisateur ;
générer un jeton d'utilisateur (218) ;
stocker, dans la mémoire, une mise en correspondance du jeton d'utilisateur avec le compte d'utilisateur dans une structure de données de mise en correspondance ;
envoyer, par l'intermédiaire de l'interface réseau, le jeton d'utilisateur au dispositif informatique distant ;
recevoir, par l'intermédiaire de l'interface réseau en provenance d'un système de développement d'application, une demande de vérification du jeton d'utilisateur, dans lequel le système de développement d'application est associé à un développeur de l'application ;
déterminer, à l'aide de la structure de données de mise en correspondance, si le jeton d'utilisateur est valide ;
et
stocker, dans la mémoire en réponse à la détermination du fait que le jeton d'utilisateur est un jeton d'utilisateur valide, une balise associée à l'application et un contexte d'application associé au jeton d'utilisateur, dans lequel la balise comporte une indication du compte d'utilisateur, le jeton d'utilisateur et un horodatage associé au jeton d'utilisateur.

6. Système informatique selon la revendication 5, dans lequel le ou les processeurs (201) sont en outre configurés pour :
recevoir, par l'intermédiaire de l'interface réseau, des données représentatives d'un état de l'application (212) ;
associer le jeton d'utilisateur (218) aux données représentatives de l'état de l'application ; et
stocker, dans la mémoire, le jeton d'utilisateur et les données représentatives de l'état de l'application.

7. Système informatique selon la revendication 6, dans lequel les instructions exécutables par le ou les processeurs (212) comprennent en outre des instructions pour :
recevoir, en provenance du dispositif informatique, une demande d'accès à un profil, dans lequel le profil est associé au compte d'utilisateur et est stocké dans le système de gestion de profils d'application ;
vérifier si le profil existe ; et
en réponse à la vérification de l'existence du profil, lier le jeton d'utilisateur et les données représentatives de l'état de l'application au profil ;
envoyer, au dispositif informatique, le profil.

8. Système informatique selon l'une quelconque des revendications 5 à 7, dans lequel l'identifiant de contexte (213) est généré en hachant au moins un ou des identifiants de paquet de l'application s'exécutant sur le dispositif informatique, un identifiant d'utilisateur spécifique à l'application d'un compte d'utilisateur associé à l'application s'exécutant sur le dispositif informatique et un identifiant de profil d'utilisateur d'un profil d'utilisateur associé à l'application.

9. Support de stockage non transitoire lisible par ordinateur configuré pour stocker des instructions qui, lorsqu'elles sont exécutées, amènent un ou des processeurs (201) d'un système informatique à :
recevoir, en provenance d'un service d'application s'exécutant sur un dispositif informatique distant, une demande de génération de jeton (215), un jeton d'authentification (216) associé à une application (212) et un identifiant de contexte (213) ;
déterminer, à l'aide du jeton d'authentification, un compte d'utilisateur ;
générer un jeton d'utilisateur (218) ;
stocker une mise en correspondance du jeton d'utilisateur avec le compte d'utilisateur dans une structure de données de mise en correspondance ;
envoyer le jeton d'utilisateur au dispositif informatique distant
recevoir, en provenance d'un système de développement d'application, une demande de vérification du jeton d'utilisateur, dans lequel le système de développement d'application est associé à un développeur de l'application ;
déterminer, à l'aide de la structure de données de mise en correspondance, si le jeton d'utilisateur est valide ; et
stocker, en réponse à la détermination du fait que le jeton d'utilisateur est un jeton d'utilisateur valide, une balise associée à l'application et un contexte d'application associé au jeton d'utilisateur, dans lequel la balise comporte une indication du compte d'utilisateur, le jeton d'utilisateur et un horodatage associé au jeton d'utilisateur.

10. Support de stockage non transitoire lisible par ordinateur selon la revendication 9, dans lequel les instructions amènent en outre le ou les processeurs (212) à :
envoyer, au système de développement d'application, le jeton d'utilisateur (218) avec des instructions pour stocker le jeton d'utilisateur et une clé associée à un mécanisme de chiffrement.

11. Support de stockage non transitoire lisible par ordinateur selon l'une quelconque des revendications 9 et 10, dans lequel le jeton d'utilisateur (218) est un premier jeton d'utilisateur, et dans lequel les instructions amènent en outre le ou les processeurs à :
déterminer que le premier jeton d'utilisateur a expiré ;
générer un second jeton d'utilisateur ;
stocker une mise en correspondance mise à jour du second jeton d'utilisateur avec le compte d'utilisateur dans une nouvelle structure de données de mise en correspondance ; et
envoyer le second jeton d'utilisateur.

12. Support de stockage non transitoire lisible par ordinateur selon l'une quelconque des revendications 9 à 11, dans lequel les instructions amènent en outre le ou les processeurs à :
déterminer s'il existe un jeton d'utilisateur existant associé à l'identifiant de contexte ; et
déterminer un compte d'utilisateur associé au jeton d'utilisateur existant en tant que compte d'utilisateur.
